Europäisches Patentamt

European Patent Office

Office européen des brevets

(19)

(11) Numéro de publication : **0 159 241**
**B1**

(12) **FASCICULE DE BREVET EUROPÉEN**

(45) Date de publication du fascicule du brevet :
09.09.87

(51) Int. Cl.⁴ : **B 60 T 13/58**

(21) Numéro de dépôt : **85400554.3**

(22) Date de dépôt : **22.03.85**

(54) **Système de freinage à au moins deux étages spécialement pour véhicule lourd.**

(30) Priorité : 23.03.84 FR 8404501

(43) Date de publication de la demande :
23.10.85 Bulletin 85/43

(45) Mention de la délivrance du brevet :
09.09.87 Bulletin 87/37

(84) Etats contractants désignés :
DE GB IT

(56) Documents cités :
EP-A- 0 075 082
FR-A- 2 523 676

(73) Titulaire : **LUCAS FRANCE S.A. Division MESSIER
AUTO INDUSTRIE**
**6, rue du Moulin par le Bas Champlan-B.P. 137**
**F-91163 Longjumeau Cédex (FR)**

(72) Inventeur : **Parolini, François**
**4, rue Paul Bourget**
**F-92160 Antony (FR)**
Inventeur : **Auffret, Jean-Yves**
**14, Chemin des Gremeaux**
**F-21000 Dijon (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne les systèmes de freinage à au moins deux étages et plus particulièrement ceux qui sont destinés à équiper les véhicules lourds, comme par exemple, les camions et tous les autres engins chenillés du type chars de combat, camions militaires etc. ...

Sur ce type de véhicule il existe généralement au moins deux étages de freinage, un premier étage pour ralentir le véhicule sur une première plage de vitesse, généralement les plages élevées (FR-A-2 523 676). Ce système est généralement constitué par un dispositif que les hommes de l'art appellent ou dénomment ralentisseur. Très schématiquement un ralentisseur est un système qui comprend des moyens aptes à se déplacer dans un milieu très visqueux pour exercer des forces de réaction permettant ainsi d'obtenir un ralentissement du vehicule par laminage de ce fluide. Ainsi, avec ce dispositif, il est exercé une force de pression qui garde une valeur approximativement constante après avoir pris sa valeur normale de ralentissement, sur une plage de vitesse qui est généralement une plage de haute vitesse, par exemple pour les camions, une plage qui va de la vitesse maximale jusqu'à une vitesse d'environ .40 km/h. Après que la vitesse soit descendue à la valeur citée ci-dessus, la pression exercée par ce ralentisseur, au niveau du fluide visqueux, diminue énormément pour tendre vers une valeur presque nulle, ce qui fait que pour cette plage inférieure, le ralentisseur n'exerce plus sa fonction de freinage. Pour pallier ce manque, les véhicules comportent généralement un deuxième étage de freinage qui est schématiquement constitué par des freins du type à disques ou à tambours, les freins à disques étant maintenant plus couramment utilisés. Un frein à disque est généralement constitué par un disque autour duquel est situé un étrier supportant deux patins coopérant avec des pistons sur lequel il est possible d'exercer des pressions données par une source de fluide haute pression, les cylindres de ces pistons étant alimentés à travers, généralement, une servo-valve pilotable pour pouvoir obtenir en sortie de celle-ci une pression déterminée.

Ainsi, avec un tel système de freinage à deux étages, on peut obtenir un ralentissement et un freinage du véhicule avec une assez bonne sécurité. Cependant, dans les dispositifs équipant actuellement les véhicules lourds, la correspondance de fonctionnement de ces deux étages n'est pas parfaitement assurée celle-ci étant essentiellement due au « métier » du pilote qui détermine à un moment donné, en fonction du ralentissement de son véhicule s'il doit assurer une compensation en commandant les freins à disques. Ceci donne, bien entendu, un bon résultat mais n'apporte pas toute la sécurité voulue ni une programmation de ralentissement constante car au passage du freinage du premier étage ou freinage du deuxième étage, il peut y avoir des à-coups nuisibles d'une part à la bonne tenue mécanique du véhicule, et d'autre part pour le confort des passagers lorsque ce système de freinage à deux étages équipe des véhicules comme des autocars et des bus.

Aussi, la présente invention a pour but de réaliser un système de freinage à au moins deux étages, spécialement adapté pour les véhicules lourds, dans lequel le pilote n'a plus à assurer lui-même la commande du deuxième étage à la fin de l'action du premier, entraînant de ce fait un ralentissement du véhicule constant, sans à-coups, et contribuant ainsi au ménagement de la mécanique.

Plus particulièrement, la présente invention a pour objet un système de freinage à au moins deux étages spécialement adapté aux véhicules lourds comprenant :

un premier étage de freinage pour une première plage de vitesse de véhicule, ce dit premier étage étant apte à exercer une force de pression fonction de la vitesse lors du ralentissement du véhicule sur ladite première plage,

un second étage de freinage sur une deuxième plage de vitesse dont les valeurs de cette deuxième plage de vitesse sont inférieures à celles de la première plage, le second étage étant apte à exercer une force de freinage en réponse à un signal de commande appliqué à son entrée, caractérisé par le fait qu'il comprend :

des premiers moyens pour élaborer un premier signal représentatif de ladite force de pression, une mémoire dont l'entrée reçoit ledit premier signal, ladite mémoire étant apte à délivrer à sa sortie un second signal dont la valeur est représentative de la valeur la plus grande de celle dudit premier signal,

des moyens pour délivrer un troisième signal représentatif de la différence des valeurs desdits second et premier signaux, et,

des moyens pour appliquer ce dit troisième signal à l'entrée dudit second étage, ce dit troisième signal constituant ledit signal de commande.

D'autres caractéristiques et avantages de la présente invention apparaîtront au cours de la description suivante donnée en regard des dessins annexés à titre illustratif mais nullement limitatif dans lesquels :

la figure 1 représente sous forme d'un bloc diagramme un mode de réalisation complet d'un système de freinage à au moins deux étages spécialement adapté aux véhicules lourds et,

la figure 2 représente un ensemble de courbes sur un diagramme permettant d'expliciter et comprendre le fonctionnement du système selon la figure 1.

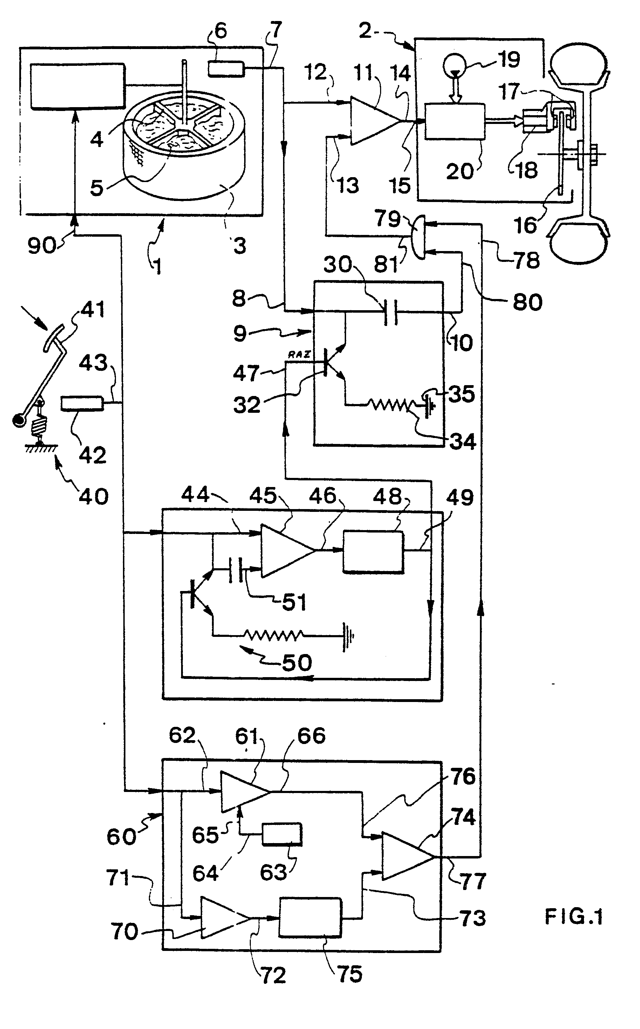

En revenant plus particulièrement à la figure 1 celle-ci représente un ensemble de système de freinage à au moins deux étages 1 et 2.

Le premier étage est constitué par un ralentisseur 3 schématiquement illustré dans sa fonction par des moyens de palettes 4 aptes à pivoter dans un milieu visqueux 5 afin de créer des forces d'amortissement. Les palettes sont généralement couplées aux moyens d'entraînement des roues, ou du pont, sur un arbre de rotation, pour exercer ainsi des forces de ralentissement. Ce ralentisseur étant bien connu en lui-même ne sera pas plus amplement décrit. Cependant, dans sa fonction, on peut très simplement dire que lorsque les palettes 4 ont pris une certaine vitesse de rotation, l'effort de frottement qu'exercent ces palettes dans le milieu visqueux 5 a une valeur à peu près constante, tant que la vitesse du véhicule n'a pas dépassé une limite inférieure par exemple, pour ceux qui sont connus, de l'ordre de 40 km/heure. Ainsi, un tel ralentisseur est utilisé pour commander et ralentir un véhicule à partir de sa vitesse supérieure jusqu'à un premier seuil de vitesse inférieure qui, comme il a été dit ci-dessus, est de l'ordre de 40 km/heure pour la majorité des véhicules utilisant ce genre de système. Plus particulièrement à ce ralentisseur, est associé un capteur 6 qui est apte à délivrer à sa sortie 7 un signal représentatif de la force qui est exercée sur les palettes, par l'amortissement du fluide visqueux. La sortie 7 du capteur 6 est reliée à une entrée 8 d'une mémoire 9 dont la fonction est de garder en mémoire une valeur de signal qu'elle est apte ensuite à délivrer à sa sortie 10 et qui est représentatif de la valeur maximale qu'aura pris le signal pendant qu'il est appliqué à l'entrée 8. Le signal délivré à cette sortie 10 sera ci-après dénommé deuxième signal, tandis que celui délivré à la sortie 7 du capteur 6 sera dit premier signal. Le système comprend un moyen pour effectuer une différence de valeur de signaux. Ce moyen est généralement constitué par un amplificateur différentiel 11 dont une première entrée 12 est reliée à la sortie du capteur 7, et dont la deuxième entrée 13 est reliée à la sortie 10 de la mémoire. La sortie 14 de cet amplificateur différentiel 11 est reliée à l'entrée 15 du deuxième étage de freinage 2. Ce deuxième étage de freinage est généralement constitué par un ensemble de système de freins à friction comme par exemple un frein à disque 16 avec lequel peuvent coopérer deux patins l7 aptes à être appliqués sur les deux faces du disque 16 par des moyens de piston 18, dont le cylindre d'alimentation est généralement alimenté à partir d'une source de fluide haute pression 19 dont la sortie est reliée au cylindre des pistons par une servo-valve 20 permettant ainsi sous un signal de commande de moduler la valeur de la pression du fluide appliquée sur les pistons, et, en conséquence, de commander ainsi la valeur des forces d'application des patins sur le disque.

A titre d'exemple, la mémoire 9 peut être constituée par une capacité 30.

Le système comporte, en outre, des moyens pour pouvoir commander le freinage lorsque par exemple, le pilote veut obtenir l'arrêt de son véhicule quand celui-ci est à une vitesse élevée. Ces moyens sont illustrés trés schématiquement en 40 et ils comprennent :

un moyen de commande notamment aux pieds constitué par une pédale 41 à laquelle est associé un capteur 42 apte à délivrer à sa sortie 43 un signal représentatif de la position de la pédale par rapport à une position origine, ou, en d'autres termes, un signal représentatif de la force de pression de freinage que voudrait obtenir le pilote du véhicule pour arrêter son engin.

Pour cela la sortie du capteur 42 est appliquée à l'entrée 44 d'un amplificateur opérationnel 45, dont la sortie 46 est reliée à l'entrée 47 de la mémoire 9 à travers une ligne à retard de longue temporisation 48. Avantageusement, la sortie 49 de cette temporisation 48 est reliée en contre-réaction à travers un système mémoire de capacité transistor 50 à la deuxième entrée 51 de l'amplificateur différentiel 45. De plus la sortie 43 du capteur 42 est connectée à une entrée 90 de mise en route du premier étage de freinage 1 qui est ainsi commandé dès l'apparition d'un signal en sortie du capteur 42 c'est-à-dire dès que le pilote appuie sur la pédale 41.

A l'ensemble du système décrit ci-dessus est associé un troisième moyen 60 qui permet d'obtenir une sécurité de freinage quelle que soit la vitesse, et notamment la vitesse faible, du véhicule. Pour cela, ce système comprend :

un amplificateur 61 à seuil, dont l'entrée 62 est reliée à la sortie 43 du capteur 42, le seuil de cet amplificateur 61 pouvant être éventuellement ajusté au moyen d'une source auxiliaire 63 dont la sortie 64 est reliée à l'entrée 65 de commande de la valeur du seuil de cet amplificateur 61. La fonction de cet amplificateur est de fournir à sa sortie 66 un signal constant dès qu'un signal est appliqué à son entrée 62. Cependant, ce moyen de sécurité 60 comporte un deuxième amplificateur 70 dont l'entrée 71 est reliée aussi à la sortie 43 du capteur 42. La sortie 72 de cet amplificateur 70 est reliée à une première entrée 73 d'une porte ET 74, à travers une constante de temps 75 ayant une valeur relativement faible par exemple de l'ordre de 0,8 seconde, comme il sera explicité ci-après, pour permettre au ralentisseur de donner en sortie du capteur 6 un signal stabilisé et représentatif de la valeur de freinage du premier étage. Ainsi, la deuxième entrée 76 de la porte ET 74 est reliée à la sortie 66 de l'amplificateur à seuil 61. Par contre, la sortie 77 de la porte ET 74 est reliée à une entrée 78 d'une porte OU 79 intercalée entre la sortie 10 de la mémoire 9 et l'entrée 13 de l'amplificateur 11 par sa deuxième entrée 80 et sa sortie 81.

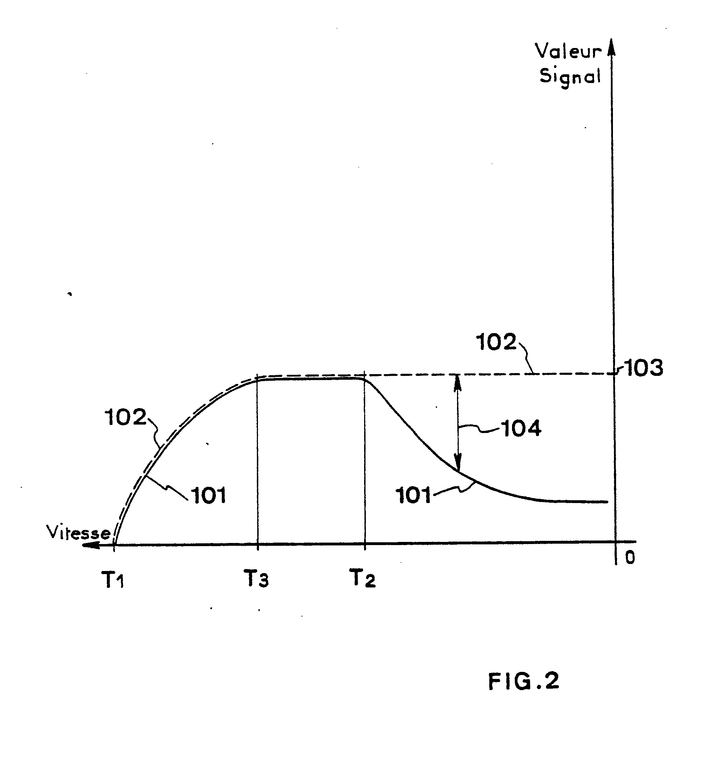

Le fontionnement du dispositif est le suivant et sera explicité en regard de la figure 2.

On suppose tout d'abord que le véhicule, par exemple un camion, a une certaine vitesse d'environ 80 à 100 km/heure, et que le pilote veut le ralentir jusqu'à son arrêt. L'ordre de commande de freinage est obtenu par le pilote qui appuie sur la pédale 41 et qui enclenche de ce fait le premier étage de freinage 1. On suppose que la mémoire était vide par une précédente remise à zéro. Ainsi, le ralentisseur à sa sortie, par le capteur 6, délivre le premier signal 101 figure 2, qui va charger la capacité 30 jusqu'au temps T3 qui est généralement inférieur à la valeur de la constante de temps donnée par le circuit 75 pour obtenir en sortie 10 un deuxième signal qui comme il a été précisé précédemment aura une valeur maximale.

D'autre part, le signal délivré à la sortie du capteur est aussi appliqué à l'amplificateur différentiel 11 qui donc, tant que la vitesse du véhicule n'a pas atteint sa vitesse limite inférieure, comme explicité ci-avant par exemple 40 km/h, la sortie 14 de l'amplificateur différentiel 11 ne délivre aucun signal. Le deuxième étage 2 n'est donc pas commandé. Dans cette première étape, seul agit le ralentisseur pour freiner le véhicule de sa vitesse maximale telle qu'elle à été prise de l'ordre de 80 à 100 km/h jusqu'à une vitesse approximative de 40 km/h. Ce phénomène s'explicite parfaitement sur la figure 2 où l'on voit qu'à partir de l'instant T1, dès que l'ordre de commande à été donné, les deux signaux, le premier signal 101 et le deuxième signal 102 prennent une certaine valeur égale jusqu'à une valeur maximale 103 qui est la valeur donnée à la sortie de la mémoire 9 et aussi appliquée à l'autre entrée de l'amplificateur différentiel 11 ce qui fait que sur cette première plage de vitesse comprise entre 80 et 100 km/h jusqu'à environ 40 km/h la différence des deux premier et second signaux est nulle.

Dès que le véhicule a atteint cette vitesse limite inférieure à l'instant T2, le premier signal à la sortie du capteur 6, c'est-à-dire 101 se met à décroître en valeur absolue et de ce fait, comme la mémoire conserve à sa sortie la valeur maximale du signal 102 qu'elle avait prise sur la première plage de vitesse, il apparaît en sortie du différentiel 11, une différence de signal ou troisième signal 104 qui permet ainsi de piloter la servo-valve qui délivre à sa sortie une pression de fluide qui va augmenter en fonction de l'augmentation du signal 104 sur la deuxième plage de vitesse entre T2 et 0 pour obtenir ainsi une pression croissante sur les patins de friction contre le disque permettant ainsi d'obtenir l'arrêt du véhicule, c'est-à-dire la vitesse nulle. De plus, il est à noter que le signal qui a été donné en sortie du capteur 42 a été appliqué à l'entrée 47 de remise à zéro de la mémoire 9 à travers la constante de temps d'une durée longue 48. Dès que ce signal apparaît en sortie 49, généralement le véhicule a eu le temps de s'immobiliser et donc la mémoire peut être réinitialisée pour un prochain freinage. En fait le signal obtenu en sortie 49 permet de commander la décharge de la capacité 30 à travers, par exemple, comme illustré le transistor jouant le rôle d'un interrupteur 32 et la résistance 34 connectée à la masse 35.

Bien entendu, cette constante de temps longue est déterminée pour être supérieure à une durée normale de freinage.

Enfin, il est bien évident que dans un but de sécurité, il est nécessaire que quel que soit l'état du ralentisseur et lorsque le véhicule doit être freiné, il y ait au moins une force minimale de freinage qui s'exerce, notamment par exemple à travers le deuxième étage 2. Pour cela les moyens 60 délivrent à leur sortie un signal 77 de valeur constante et fourni par l'amplificateur à seuil pour pouvoir constamment appliquer sur les patins du disque une pression minimale. Comme mentionné dans la description, cette commande minimale de freinage obtenu à la sortie 66 de l'amplificateur à seuil 61 est appliquée à la servo-valve à travers la porte ET 74 qui ne laisse passer la valeur de ce signal qu'après une certaine constante de temps fournie par la temporisation 75. Cette temporisation est déterminée pour que le ralentisseur ait suffisamment de temps pour prendre la valeur normale d'équilibre illustré sur la figure entre T1 et T3 et ne pas appliquer indûment ce signal si ce ralentisseur n'était actionné que pendant un temps très court accidentellement pour quel que cause que ce soit.

**Revendications**

1. Système de freinage à au moins deux étages spécialement adapté aux véhicules lourds comprenant :

un premier étage (1) de freinage pour une première plage de vitesse de véhicule, ce dit premier étage étant apte à exercer une force de pression fonction de la vitesse lors du ralentissement du véhicule sur ladite première plage,

un second étage (2) de freinage sur une deuxième plage de vitesse dont les valeurs de cette deuxième plage de vitesse sont inférieures à celles de la première plage, le second étage étant apte à exercer une force de freinage en réponse à un signal de commande appliqué à son entrée, caractérisé par le fait qu'il comprend :

des premiers moyens (6) pour élaborer un premier signal représentatif de ladite force de pression,

une mémoire (9) dont l'entrée (8) reçoit ledit premier signal, ladite mémoire étant apte à délivrer à sa sortie (10) un second signal dont la valeur est représentative de la valeur la plus grande de celle dudit premier signal,

des moyens (11) pour délivrer un troisième signal représentatif de la différence des valeurs desdits second et premier signaux, et,

des moyens (18, 19, 20...) pour appliquer ce dit troisième signal à l'entrée dudit second étage, cedit troisième signal constituant ledit signal de commande.

2. Système selon la revendication 1, caractérisé par le fait qu'il comporte des moyens (45, 48, 50, 51...) pour commander la remise à zéro de ladite mémoire (9) par un signal de remise à zéro.

3. Système selon la revendication 2, caractérisé par le fait que lesdits moyens pour commander la remise à zéro de ladite mémoire, comporte une constante de temps (48) apte à retarder l'émission dudit signal de remise à zéro.

4. Système selon la revendication 3, caractérisé par le fait que ladite constante de temps (48) a une valeur au moins égale à une période normale entre deux coups de frein pour ledit véhicule.

5. Système selon l'une des revendications précédentes, caractérisé par le fait qu'il comporte des moyens (60) pour commander ledit second étage pour qu'il donne au moins une force de freinage minimale.

## Claims

1. A braking system having at least two stages, particularly adapted to heavy vehicles, including :

a first braking stage (1) for a first vehicle speed range, said first stage being arranged to exert a pressure force which is a function of the speed when the vehicle slows down at said first range,

a second braking stage (2) at a second speed range, the values of which are smaller than those of the first range, the second stage being arranged to exert a braking force in response to a control signal applied to its input, characterised by the fact that it includes :

first means (6) for shaping a first signal representing said pressure force,

a memory (9) of which the input (8) receives said first signal, said memory being arranged to supply at its output (10) a second signal of which the value represents the greatest value of the first signal,

means (11) for supplying a third signal representing the difference between the values of said second and first signals, and,

means (18, 19, 20...) for applying said third signal to the input of said second stage, said third signal constituting the control signal.

2. A system according to Claim 1, characterised by the fact that it has means (45, 48, 50, 51...) for controlling the return to zero of said memory (9) by a return to zero signal.

3. A system according to Claim 2, characterised by the fact that said means for controlling the return to zero of said memory has a time constant (45) arranged to delay the emission of the return to zero signal.

4. A system according to Claim 3, characterised by the fact that said time constant (48) has a value at least equal to a normal time lapse between two applications of the brake of said vehicle.

5. A system according to any one of the preceding claims, characterised by the fact that it has means (60) for controlling said second stage so that it gives at least a minimum braking force.

## Patentansprüche

1. Bremssystem mit mindestens zwei Stufen, das speziell für schwere Fahrzeuge geeignet ist, und das umfaßt :

eine erste Bremsstufe (1) für einen ersten Geschwindigkeitsbereich des Fahrzeuges, wobei diese erste Bremsstufe geeignet ist, beim Verlangsamen des Fahrzeuges in dem genannten Geschwindigkeitsbereich, eine Druckkraft als Funktion der Geschwindigkeit auszuüben,

eine zweite Bremsstufe (2) in einen zweiten Geschwindigkeitsbereich, dessen Werte unter denen des ersten Geschwindigkeitsbereiches liegen, wobei die zweite Stufe geeignet ist, eine Bremskraft in Abhängigkeit von einem Steuersignal auszuüben, das seinem Eingang zugeführt wird, dadurch gekennzeichnet, das es umfaßt :

erste Einrichtungen (6), um ein erstes Signal zu erarbeiten, das die genannte Druckkraft darstellt,

einen Speicher (9), dessen Eingang (8) das genannte erste Signal empfängt, wobei der genannte Speicher geeignet ist, an seinem Ausgang (10) ein zweites Signal zu liefern, dessen Wert den größten Wert des genannten ersten Signals darstellt,

Einrichtungen (11), um ein drittes Signal zu liefern, das die Differenz der Werte des genannten zweiten und ersten Signals darstellt, und

Einrichtungen (18, 19, 20), um dieses genannte dritte Signal dem Eingang der genannten zweiten Stufe zuzuführen, wobei das genannte dritte Signal das genannte Steuersignal ist.

2. System nach Anspruch 1, dadurch gekennzeichnet, daß es Einrichtungen (45, 48, 50, 51) zur Steuerung der Rückstellung des genannten Speichers (9) auf Null, durch ein Signal zur Rückstellung auf Null umfaßt.

3. System nach Anspruch 2, dadurch gekennzeichnet, daß die genannten Einrichtungen zum Steuern der Rückstellung des genannten Speichers auf Null eine Zeitkonstante (48) umfassen, die geeignet ist, das Aussenden des genannten Signals zur Rückstellung auf Null zu verzögern.

4. System nach Anspruch 3, dadurch gekennzeichnet, daß die genannte Zeitkonstante (48) einen Wert hat, der mindestens gleich einer normalen Periode zwischen zwei Bremsstößen für das genannte Fahrzeug ist.

5. System nach einem der vorhergehenden Asprüche, dadurch gekennzeichnet, daß es Einrichtungen (60) zum Steuern der genannten zweite Stufe umfaßt, damit sie zumindest eine minimale Bremskraft abgibt.

FIG.1

FIG.2